(19) Europäisches Patentamt
European Patent Office
Office européen des brevets

(11) **EP 2 628 102 B1**

(12) **FASCICULE DE BREVET EUROPEEN**

(45) Date de publication et mention
de la délivrance du brevet:
**15.02.2023 Bulletin 2023/07**

(21) Numéro de dépôt: **11794531.1**

(22) Date de dépôt: **14.10.2011**

(51) Classification Internationale des Brevets (IPC):
**B29C 64/386** (2017.01) **G06F 30/00** (2020.01)
**G06F 119/18** (2020.01)

(52) Classification Coopérative des Brevets (CPC):
**B29C 64/386; G06F 30/00;** G06F 2119/18;
Y02P 90/02

(86) Numéro de dépôt international:
**PCT/FR2011/052407**

(87) Numéro de publication internationale:
**WO 2012/049434 (19.04.2012 Gazette 2012/16)**

(54) **PROCÉDÉ ET DISPOSITIF DE PROTOTYPAGE RAPIDE**

VERFAHREN UND VORRICHTUNG FÜR SCHNELLE PROTOTYPENHERSTELLUNG

RAPID PROTOTYPING METHOD AND DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **15.10.2010 FR 1058412**

(43) Date de publication de la demande:
**21.08.2013 Bulletin 2013/34**

(73) Titulaire: **Prodways**
**75002 Paris (FR)**

(72) Inventeur: **ALLANIC, André-Luc**
**F-14710 Vierville-Sur-Mer (FR)**

(74) Mandataire: **Santarelli**
**49, avenue des Champs-Elysées**
**75008 Paris (FR)**

(56) Documents cités:
**US-A1- 2002 188 369**

• **ERDIM H ET AL: "Classifying points for sweeping solids", COMPUTER AIDED DESIGN, ELSEVIER PUBLISHERS BV., BARKING, GB, vol. 40, no. 9, 1 septembre 2008 (2008-09-01), pages 987-998, XP025434467, ISSN: 0010-4485, DOI: DOI:10.1016/J.CAD.2008.07.005 [extrait le 2008-07-31]**
• **Chari Jana K ET AL: "Robust Prototyping", , 31 August 1993 (1993-08-31), XP055784508, Solid Freeform Fabrication Symposiums, The University of Texas, Austin DOI: 10.15781/t2bk1768v Retrieved from the Internet: URL:https://repositories.lib.utexas.edu/bi tstream/handle/2152/65050/1993-16-Chari.pd f?sequence=2&isAllowed=y [retrieved on 2021-03-11]**
• **Nick Thissen: "Finding whether a point is within a polygon-VBForums", vbforums, 22 March 2010 (2010-03-22), XP055784510, Retrieved from the Internet: URL:https://www.vbforums.com/showthread.ph p?608276-Finding-whether-a-point-is-within -a-polygon [retrieved on 2021-03-11]**
• **Anonymous: "Detecting if a point is inside a mesh? 2.5 API - Coding / Python Support - Blender Artists Community", , 28 September 2010 (2010-09-28), XP055785074, Retrieved from the Internet: URL:https://blenderartists.org/t/detecting -if-a-point-is-inside-a-mesh-2-5-api/48586 6 [retrieved on 2021-03-12]**

EP 2 628 102 B1

**Description**

**Domaine technique**

La présente invention concerne un procédé pour fabriquer un produit, tel un prototype. Elle concerne aussi un dispositif pour mettre en oeuvre le procédé selon l'invention, et un produit obtenu par le procédé ou dispositif selon l'invention.

L'invention permet notamment de réaliser plusieurs lithographies successives de couches superposées afin de fabriquer un produit en trois dimensions. Le domaine de l'invention est donc plus particulièrement mais de manière non limitative celui du prototypage rapide et de la stéréolithographie.

**Etat de la technique antérieure**

On connaît des procédés de fabrication de produits (typiquement des prototypes) en trois dimensions par empilement de couches, comme par exemple par stéréolithographie ou par dépôt de filament (ou FDM pour « fused déposition Modeling »), comme dans le document US 2002/0188369 A1.

Le principe de la stéréolithographie est le suivant :

1) on projette au moins une image de projection sur une couche photo réactive, ladite couche photo réactive se solidifiant sur l'aire où l'image de projection est projetée, puis
2) on recouvre la couche solidifiée par une nouvelle couche de résine photo réactive, puis
3) on projette une nouvelle fois au moins une image de projection sur cette nouvelle couche photo réactive,

les étapes 2) et 3) étant réitérées autant de fois que nécessaire pour réaliser un produit en trois dimensions. Généralement, l'image de projection varie pour chaque couche. Par exemple, pour réaliser une boule, cette image consiste en un disque dont le diamètre croît d'un premier sommet de la boule jusqu'au milieu de la boule, puis décroît du milieu de la boule jusqu'à un deuxième sommet de la boule.

Cette technique permet de réaliser des produits en trois dimensions directement dans une résine photopolymérisable sans usinage. L'image solidifiée ou à solidifier d'une couche est appelée image de consigne. L'image de projection peut être bien plus petite que l'aire à solidifier. Pour une même couche, plusieurs projections sont donc nécessaires. Par exemple, pour une image de consigne consistant en un carré de 30 centimètres de côté, on projette successivement et côte à côte neuf fois une image de projection consistant en un carré de 10 centimètres de côté.

Le prototypage rapide par dépôt de filament consiste à faire fondre une résine (généralement du plastique) à travers une buse chauffée à haute température, de manière à en faire sortir un filament en fusion (de l'ordre du dixième de millimètre) de résine et à déposer ce fil pour le coller par fusion sur une couche précédemment déposée.

Dans les procédés de fabrication de produits en trois dimensions spatiales (3D) par empilement de couches (par opposition aux machines d'usinage qui fonctionnent par enlèvement de matière), on a une étape de transformation d'informations en trois dimensions spatiales (3D) vers une série d'informations de section en deux dimensions spatiales (2D) représentatives des couches. Les couches peuvent être planes comme dans la stéréolithographie ou courbées comme dans certains cas de dépôts de filament. La technique classique de transformation du fichier 3D en fichier 2D consiste à calculer un empilement de sections mathématiques, correspondant à l'empilement réel des couches lors de la fabrication.

Une fois qu'on dispose d'informations géométriques représentatives d'une section du produit à fabriquer, on est amené à effectuer un traitement complémentaire de cette information 2D de section et obtenir ainsi pour chaque couche des informations 2D de fabrication adaptées à la technologie utilisée.

Par exemple, on peut définir un parcours sous forme de vecteurs (vecteurs de contour, vecteurs de remplissage) comme par exemple dans le cas d'une machine de prototypage à laser et miroirs galvanométriques (stéréolithographie, frittage laser). Pour une fabrication par dépôt de filament, c'est une démarche proche mais le parcours optimal est différent car la dynamique de la tête physique déposant du matériau est très différente de celle d'un impact lumineux défléchi par des miroirs.

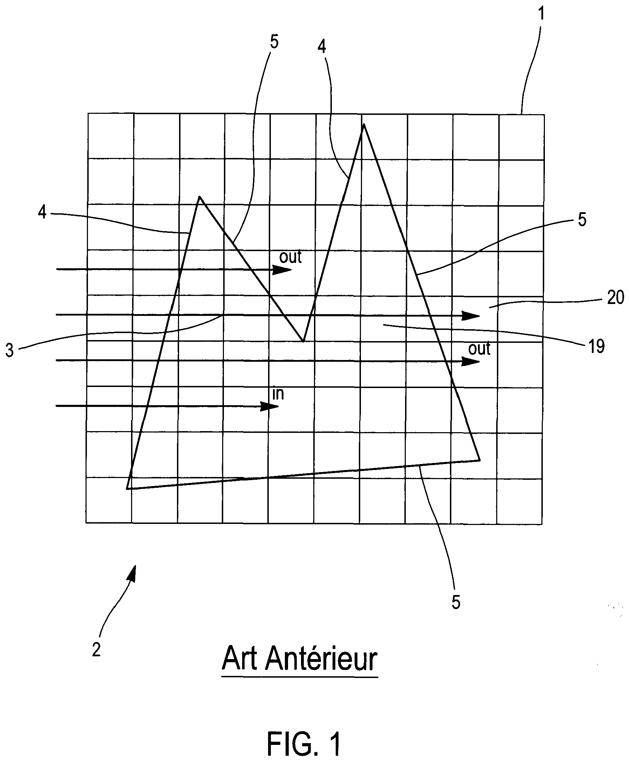

Dans d'autres exemples, on peut utiliser des définitions matricielles plutôt que vectorielles, comme par exemple dans le cas de machines de prototypage à projection de lumière directe (ou DLP pour « Digital Light Processing ®») ou à têtes d'impression à buses. Le traitement d'une couche consiste alors à définir quels sont les pixels de la couche qui se trouvent dans la matière du produit à fabriquer. Pour ceci, on applique l'algorithme suivant (« scanline fill ») en référence à la figure 1 :

Pour chacune des sections à traiter :

- on applique une grille 1 sur la couche 2,

- pour chaque ligne 3 de la grille (on pourrait aussi itérer sur les colonnes...) :

  • on démarre d'une extrémité de la ligne, et on se dirige vers l'autre bord de la section (de gauche à droite sur la figure 1), en mettant à jour un compteur "nombre d'entrée/sortie dans la matière" ayant pour valeur initiale "0" (on considère qu'il n'y a pas de matière au bord de la grille) : chaque fois qu'on croise une limite 4 d'entrée dans la matière, on augmente le compteur de 1, et on le décrémente de 1 chaque fois qu'on croise une limite 5 de sortie de la matière ;
  • à chaque fois qu'on passe sur un pixel, on regarde l'état du compteur: s'il est supérieur à 0, on coche le pixel comme étant à l'intérieur de l'objet défini par les contours 4, 5, et on coche le pixel comme étant à l'extérieur de l'objet défini par les contours 4, 5 sinon.

La grille 1 de la figure peut être plus généralement un pavage quelconque par exemple du type nid d'abeille. Les itérations se font alors non pas sur des "lignes" ou "colonnes", mais selon les axes préférentiels des pavages utilisés.

Un tel traitement complémentaire a des inconvénients.

Tout d'abord, il nécessite un temps de calcul non négligeable.

Pour ne pas immobiliser une machine de fabrication pendant ce traitement, et du fait de la complexité de ce traitement, ce traitement doit être effectué sur un calculateur dédié indépendant de la machine de fabrication, ce qui implique en pratique en surplus une étape de transfert des informations du calculateur vers un autre ordinateur de contrôle de la machine de fabrication.

En outre, du fait de cette étape de transfert, les informations de fabrication doivent être limitées en volume pour éviter que le transfert ne prenne trop de temps, ce qui limite la résolution spatiale du produit à fabriquer.

Enfin, la parallélisation naturelle de ce traitement est simple à mettre en oeuvre: on peut faire le traitement pour chaque section indépendamment et en parallèle. Ces traitements ont toutes les chances de prendre un temps différent d'une couche à l'autre, par exemple en fonction du nombre de limites d'entrée et de sortie de la couche. Donc dans le cas général les traitements ne seront pas de même durée d'une couche à une autre et vont devoir utiliser des mécanismes itératifs en interne à chaque traitement de couche, et de synchronisation complexes entre traitements de couches.

De façon similaire, à l'intérieur d'un de ces traitements, on peut effectuer en parallèle les parcours de lignes d'une extrémité à l'autre du champ (étape 2 ci-dessus). On se retrouve avec une situation comparable à la mise en parallèle des traitements de sections: on a des lignes qui vont être plus complexes que d'autres, en fonction du nombre de franchissements de lignes d'entrées ou de sorties, et avec des algorithmes itératifs et des synchronisations complexes.

Il est donc possible d'imaginer appliquer un parallélisme complexe mais non "massif", c'est-à-dire uniquement de type "MIMD" (pour « Multiple Instruction on Multiple Data ») et non "SIMD" (pour « Single Instruction on Multiple Data »), alors que l'on considère que les algorithmes SIMD sont potentiellement plus efficaces, mais sont restreints dans leurs champs d'application à des opérations particulièrement simples. Pour rappel, le parallélisme SIMD est un des quatre modes de fonctionnement définis par la taxonomie de Flynn et désigne un mode de fonctionnement où plusieurs unités de calcul fonctionnent en parallèle, de sorte que la même instruction soit appliquée en parallèle dans le temps à plusieurs données pour produire plusieurs résultats.

Le but de la présente invention est de proposer un procédé ou dispositif de lithographie permettant de résoudre au moins un des inconvénients susmentionnés.

Le document intitulé « Robust Prototyping », Chari Jana K ET AL, 31 août 1993, Solid Freeform Fabrication Symposiums, The University of Texas, Austin, décrit un système **de prototypage, pouvant notamment mettre en oeuvre la méthode connue sous le nom** de Ray-**Casting pour déterminer des points faisant partie d'un** objet et **des points n'en** faisant par partie.

## Exposé de l'invention

Cet objectif est atteint avec un procédé pour fabriquer un produit **selon l'invention** et un dispositif pour fabriquer un produit **selon l'invention.**

**L'invention concerne** ainsi un procédé pour fabriquer un produit, présentant les caractéristiques de la revendication 1 ou de chacune des revendications 2 à 13 pour **déterminer si des points sont à l'intérieur ou à l'extérieur du produit à fabriquer ou d'une** partie de celui-ci.

Une fois que l'on a déterminé quel point de l'espace est situé à l'intérieur ou à l'extérieur de l'objet, le procédé selon l'invention peut comprendre une fabrication du produit par prototypage rapide et/ou par empilement de couche, par exemple par stéréolithographie ou par dépôt de filament.

**L'invention concerne également** un dispositif pour fabriquer un produit présentant les caractéristiques de la revendication 14 ou de la revendication 15 pour déterminer si **des points sont à l'intérieur ou à l'extérieur du produit à fabriquer ou d'une partie de** celui-ci.

Les moyens pour itérer peuvent être agencés pour effectuer en parallèle dans le temps des itérations pour plusieurs surfaces élémentaires.

Pour au moins une surface élémentaire, les moyens pour itérer peuvent être agencés pour effectuer en parallèle dans le temps des itérations pour plusieurs points de travail. Le dispositif selon l'invention peut comprendre en outre des moyens pour synchroniser par durée d'exécution fixe des itérations effectuées en parallèles, et non pas par attente de fin de tâche.

Le dispositif selon l'invention peut en outre comprendre des moyens pour fabriquer, une fois que l'on a déterminé quel point de l'espace est situé à l'intérieur ou à l'extérieur de l'objet, le produit par exemple par prototypage rapide et/ou par empilement de couche, par exemple par stéréolithographie ou par dépôt de filament.

## Description des figures et modes de réalisation

D'autres avantages et particularités de l'invention apparaîtront à la lecture de la **description détaillée de mises en oeuvre et de modes de réalisation nullement limitatifs,** et des dessins annexés suivants :

- la figure 1 illustre un procédé selon l'état de la technique antérieure ;
- la figure 2 illustre différentes données d'un procédé selon l'invention,
- la figure 3 illustre un premier exemple de mise en oeuvre de procédé selon l'invention,
- la figure 4 illustre une superposition de plusieurs couches polymérisées se chevauchant et obtenues par le premier exemple de mise en oeuvre de procédé selon l'invention,
- la figure 5 illustre différents points et images de points dans un deuxième exemple de mise en oeuvre de procédé selon l'invention, et
- la figure 6 illustre le deuxième exemple de mise en oeuvre de procédé selon l'invention.

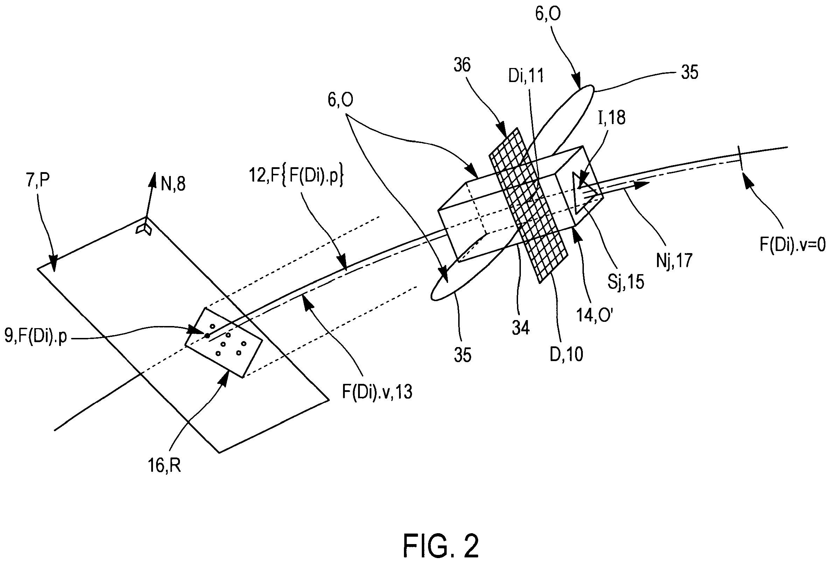

On va donc, en référence aux figures 2 à 6, décrire différents modes de réalisation de procédé selon l'invention pour fabriquer un produit par prototypage rapide. On considère pour cela un objet 0 (référencé 6) qui est au moins une partie du produit à fabriquer. L'objet O est un objet :

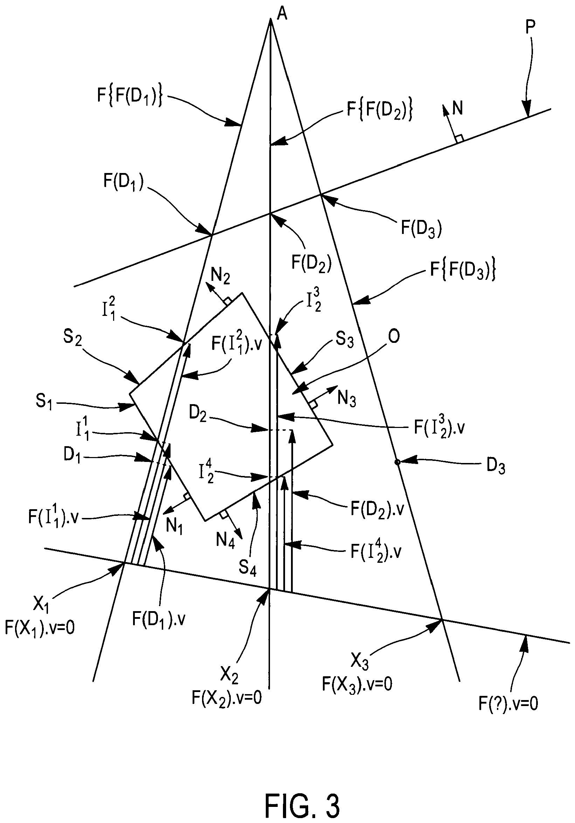

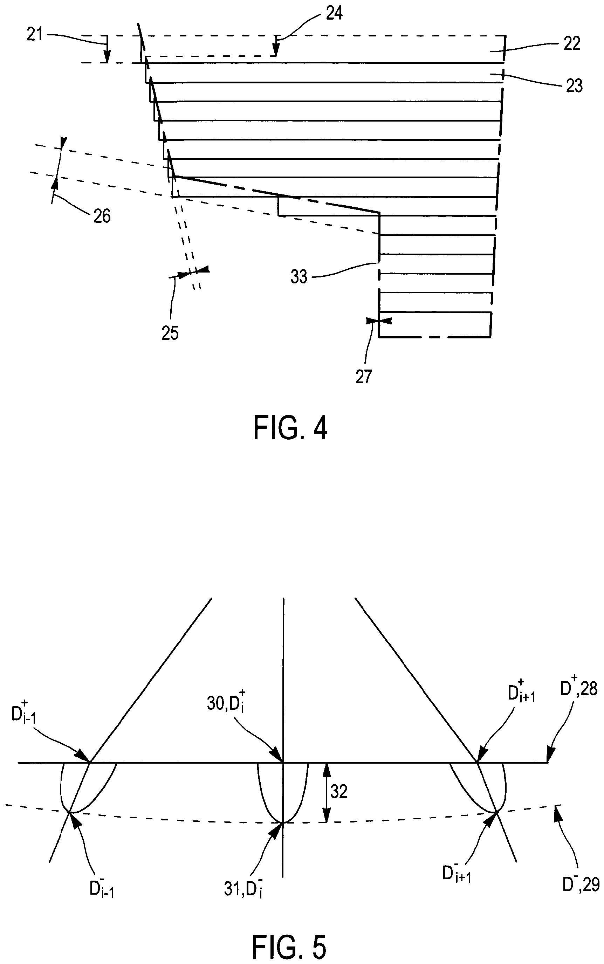

- dans un espace E en trois dimensions (objet 3D), comme illustré sur la figure 2, et dans ce cas l'objet 3D correspond au produit 3D à fabriquer, ou
- dans un espace E en deux dimensions, comme illustré sur les figures 3 et 5 : dans ce cas là, cet objet 2D dans un espace à deux dimensions correspond typiquement à une tranche d'un produit 3D à construire ; cette tranche peut consister en une tranche quelconque, oblique ou autre du produit 3D à construire, de préférence verticale, mais ne consiste de préférence pas en une des couches horizontale à déposer pour fabriquer le produit par prototypage rapide. En outre, dans le cas où l'objet est en deux dimensions, chaque surface $S_i$, $S_j$, P ou R décrite par la suite est une surface de largeur nulle, c'est-à-dire une ligne.

Par espace en deux dimensions, on entend typiquement:

- soit une nappe ou surface ou un plan pouvant se décomposer en points ou pixels,
- soit une couche pouvant se décomposer en voxels le long de deux directions spatiales X et Y et ayant une épaisseur d'un unique voxel le long d'une troisième direction spatiale Z.

Par espace en trois dimensions, on entend typiquement un espace pouvant se décomposer en voxels et ayant une épaisseur supérieure à un voxel le long de chacune des trois directions spatiales X, Y et Z.

On va tout d'abord décrire, en référence à la Figure 2, différentes données et informations exploitées dans les exemples de procédé selon l'invention ou nécessaires à la compréhension des exemples de procédé selon l'invention.

De façon préliminaire, on admet un certain nombre d'hypothèses.

Il existe une description de l'objet O, typiquement sous la forme d'au moins un fichier informatique de données. L'objet O est supposé décrit dans l'espace fini E. L'espace E est un espace Euclidien

La description de l'objet O rend possible de déterminer sans ambiguïté si un point de E fait ou non partie de l'objet O. Cela peut impliquer la correction d'ambiguïtés qu'on trouve parfois dans certains fichiers dégradés (fichiers dits non fermés). De nombreux logiciels permettent de corriger manuellement ou automatiquement ces fichiers. Dans le cadre des exemples décrits de l'invention, on se place dans le cas où toutes les ambiguïtés ont été levées.

La description de l'objet O a pour forme une décomposition de l'objet O en plusieurs surfaces élémentaires $S_i$ orientées et de préférence planes :

$$O = \bigcup_i S_i$$

Par exemple, cette condition est assurée si l'objet O est décrit dans un standard de fait du prototypage rapide, c'est-à-dire sous la forme d'une collection de triangles orientés. Un tel standard a pour nom STL (pour « Stéréolithographie »). Si l'objet O est dans un format en provenance d'un logiciel de CAO, il existe toujours des interfaces STL qui respectent la forme originale jusqu'à des précisions arbitrairement élevées.

Le procédé selon l'invention est réalisé à partir de ces données descriptives de l'objet O, qui prennent la forme soit d'une décomposition de l'objet O en plusieurs surfaces élémentaires $S_i$ orientées, d'aire non nulle, et de préférence planes si l'objet O est décrit dans un espace E à trois dimensions spatiales, soit d'une décomposition de l'objet O en plusieurs lignes élémentaires $S_i$ (aussi appelées surfaces élémentaires pour simplifier la description) orientées et de préférence droites si l'objet O est décrit dans un espace E à deux dimensions spatiales

Dans tout ce document, chaque indice i ou j est un nombre entier naturel entre 1 et M, avec M par exemple selon le cas un nombre total de points de travail $D_i$ ou de surfaces élémentaires respectivement $S_i$ ou $S_j$.

On définit un plan de travail P, (référencé 7) orienté par sa normale N (référencé 8).

On définit une projection F qui a tout point X (ou $A_E$ ou Y ou $D_i$ selon le point considéré) de E n'appartenant pas à P associe un point $A_P$ appartenant à P, ou bien indique qu'il n'y a pas de point de P satisfaisant la projection, c'est-à-dire que F ne s'applique pas. Lorsque F s'applique, on note $A_P$ par F(X).p le point de P projection par F de X, ou encore par $F(D_i)$.p (référencé 9) le point de P projection par F de $D_i$.

F satisfait les conditions suivantes:

    **a.** L'ensemble des points de E ayant pour projection un même point $A_P$ de P, noté $F\{A_P\}$ (ou encore $F\{F(X).p\}$, $F\{F(D_i).p\}$, ... selon le point considéré, aussi noté $F\{F(X)\}$, $F\{F(D_i)\}$, ...), est continu, dérivable, de dimension 1. On peut donc définir une coordonnée curviligne sur cet ensemble, ainsi qu'une tangente en tout point.

        i. on note F(X).v la coordonnée curviligne de X le long de $F\{F(X).p\}$.
        ii. on note F(X).n la tangente à $F\{F(X).p\}$ au point X.

    **b.** Un point de E ne peut avoir qu'une seule projection par F (plus formellement: si X a pour projection F(X).p et Y a pour projection F(Y).p, et que F(X).p n'est pas confondu avec F(Y).p, alors X n'est pas confondu avec Y).

    **c.** La "coordonnée curviligne" le long d'un ensemble $F\{A_P\}$ constitue une relation d'ordre sur $F\{A_P\}$

Les conditions a et b sont satisfaites par exemple pour une projection "orthographique" avec une direction de projection non parallèle à P et un point de perspective à l'infini, ou une projection qui part d'un point de perspective $A_I$ qui définit $A_P$ comme l'intersection de la droite ($A_I A_E$) avec P, si elle existe. Dans le cas qui nous concerne, on peut définir des projections qui ne sont plus basées sur des droites, mais sur des modélisations de chemins lumineux dans un système optique (lignes brisées), pour par exemple tenir compte des déformations géométriques du dispositif utilisé.

La condition c peut être satisfaite avec tout simplement la coordonnée curviligne égale à la distance linéaire le long de $F\{A_P\}$ entre une origine et le point considéré. Cependant, pour des raisons de compatibilité des calculs avec d'autres contraintes (utilisation de coordonnées homogènes), nous prenons de préférence l'inverse de cette distance linéaire, avec une origine qui ne se trouve pas sur P, le tout multiplié par une constante. L'algorithme s'appliquerait tout aussi bien sur d'autres exemples de fonctions monotones. L'important est qu'on puisse appliquer une relation d'ordre aux éléments de $F\{A_P\}$, c'est-à-dire comparer des valeurs entre elles et être assuré que la comparaison est transitive.

$$D = \bigcup_i D_i$$

Ensuite, on considère un ensemble (référencé 10) de points de travail $D_i$ (référencé 11) de E pour lesquels il existe une projection par F, et dont on veut savoir pour chacun d'entre eux s'ils font ou non partie de l'objet O. Idéalement, cet ensemble comprend de nombreux points (des centaines de milliers par exemple), pour tirer au mieux parti du modèle SIMD qu'on vise. Le procédé selon l'invention marche particulièrement bien pour quelques dizaines à quelques dizaines de millions d'éléments.

Voici sa description (figure 2) selon les étapes I à IV suivantes:

$$O : O' = \bigcup_j S_j$$

    **I.** De manière optionnelle, on détermine un sous-ensemble O' (référencé 14) de de sorte que la description de l'objet O' a pour forme une décomposition de l'objet O' en plusieurs surfaces élémentaires $S_j$ (référencé 15) sélectionnées parmi les $S_i$, orientées et de préférence planes. L'intérêt de déterminer un tel sous ensemble est illustré sur la figure 2 : pour un objet O comprenant un coffrage 34 et des ailettes 35, on peut ne considérer que l'objet O' ne comprenant que le coffrage 34 sans les ailettes 35 pour savoir si les points $D_i$ de l'ensemble D sont dans le coffrage 34 et donc dans l'objet O. Le sous ensemble O' est déterminé:

- soit en gardant O' = O (dans ce cas là l'ensemble des $S_j$ correspond à l'ensemble des $S_i$, et il suffit de remplacer $S_j$ par $S_i$ et O' par O dans la suite de la description),
- soit optionnellement en effectuant un filtre selon les étapes a. et b. suivantes:

  a. on détermine une région R (référencé 16) de P contenant tous les $F(D_i).p$

  b. on détermine le sous-ensemble O' de O tel qu'un élément de O ne faisant pas partie de O' n'a pas de projection par F sur P appartenant à R. Cette étape de tri est utilisée classiquement en informatique pour réduire la durée d'un calcul en l'appliquant localement à un sous-ensemble plus petit (ici les seuls éléments de O qui peuvent avoir une projection dans R).

II.pour tout élément $D_i$ appartenant à D, c'est-à-dire pour chaque point de travail $D_i$ pour lequel on cherche à déterminer s'il est à l'intérieur ou à l'extérieur de l'objet O', on détermine une ligne $F\{F(D_i).p\}$ (référencé 12) passant par ce point de travail et on détermine $F(D_i).v$ (référencé 13) la coordonnée curviligne du point de travail $D_i$ le long de $F\{F(D_i).p\}$. Si E est un espace à trois dimensions, on choisit de manière astucieuse comme illustré sur la figure 2:

- l'ensemble D des points de travail $D_i$ pour que ces points $D_i$ soient regroupés dans un plan de travail ou une surface de travail 36, le plan ou la surface 36 correspondant de préférence en une des couches à déposer pour fabriquer le produit par prototypage rapide, et
- chaque ligne $F\{F(D_i).p\}$ de manière à ce qu'elle soit transversale à ce plan ou surface 36 par le point $D_i$ associé à cette ligne.
  Ceci permet de maximiser le nombre d'itérations (étape IV décrite par la suite) à paralléliser dans le temps, et peut même permettre d'itérer simultanément dans le temps les opérations pour tous les points de travails (pixels ou voxels) d'une même couche de prototypage rapide.

III. à chaque point de travail $D_i$, pour lequel on cherche à déterminer s'il est à l'intérieur ou à l'extérieur de l'objet O', et donc à toute ligne $F\{F(D_i).p\}$, on associe un compteur dédié uniquement à ce point de travail $D_i$, noté $F(D_i).c$, et dont la valeur est initialisée à 0.

IV. on itère, sur chacune des surfaces élémentaires $S_j$, les opérations suivantes : pour tout élément $S_j$ appartenant à O', on note sa normale $N_j$ (référencé 17). Pour tout $D_i$ appartenant à D, on calcule l'intersection entre $F\{F(D_i).p\}$ et $S_j$. Autrement dit, on recherche une intersection entre la surface élémentaire $S_j$ et la ligne $F\{F(D_i).p\}$ passant par le point de travail $D_i$ :

  i. s'il n'y a pas d'intersection, on passe au $D_i$ suivant

  ii. s'il y a une intersection I (référencé 18), et si $F(I).v>F(D_i).v$, c'est-à-dire si l'intersection I se trouve au delà de la position du point de travail $D_i$ le long de la ligne $F\{F(D_i).p\}$ par rapport à une origine $F(D_i).v=0$ de la ligne, on passe au $D_i$ suivant

  iii. si $F(I).v \leq F(D_i).v$, c'est-à-dire si l'intersection I se trouve avant ou sur la position du point de travail $D_i$ le long de la ligne $F\{F(D_i).p\}$ par rapport à l'origine $F(D_i).v=0$ de la ligne, et :

  - si le produit scalaire $\vec{N_j}.\overrightarrow{F(I).n}$ est $> 0$, c'est-à-dire si la surface $S_j$ est une surface d'entrée de la ligne à l'intérieur de l'objet O', on modifie le compteur $F(D_i).c$ selon une modification d'entrée (typiquement on incrémente $F(D_i).c$ de 1 unité),
  - sinon (si le produit scalaire $\vec{N_j}.\overrightarrow{F(I).n}$ est $\leq 0$, c'est-à-dire si la surface $S_j$ est une surface de sortie de la ligne à l'extérieur de l'objet O'), on modifie le compteur $F(D_i).c$ selon une modification de sortie de valeur opposée à la modification d'entrée (typiquement on décrémente $F(D_i).c$ de 1 unité)

V. On déduit l'appartenance de $D_i$ à l'objet O' par le signe de $F(D_i).c$: $D_i$ appartient à O' si et seulement si $F(D_i).c > 0$. Autrement dit, on détermine si le point de travail est à l'intérieur ou à l'extérieur de l'objet O' en fonction de la valeur positive ou négative (ou du signe) du compteur $F(D_i).c$ dédié uniquement au point de travail $D_i$.

La quasi totalité des calculs du procédé selon l'invention s'effectue durant l'étape IV, qui a pour caractéristiques essentielles:

- le calcul peut être simple (en choisissant soigneusement F, on peut par exemple l'implémenter sous forme de l'intersection entre un plan et une droite)
- les opérations élémentaires utilisées (produits scalaires, produits de matrices) sont intrinsèquement vectorielles et donc faciles à paralléliser.
- la durée maximale de l'opération est bornée (pas de boucle), et identique d'une opération à l'autre dès que l'opération a un résultat non trivial (c'est-à-dire si on ne passe pas au $D_i$ suivant).
- les données nécessaires sont peu nombreuses (besoin de $S_j$ et $D_i$), et totalement indépendantes de résultats d'autres opérations intermédiaires: $S_j$ et $D_i$ sont directement les données du problème à résoudre.

Cet procédé selon l'invention est donc particulièrement bien adapté à une implémentation sous forme SIMD:

- Les instructions du programme sont communes à toutes les tâches parallèles
- Les données ne dépendent d'aucune opération intermédiaire
- La synchronisation est triviale, par simple durée d'exécution fixe

En outre, selon le choix de la position de l'origine et/ou un choix de programmation, les alinéas i. à iii. de l'étape IV peuvent varier, par exemple selon la variante suivante :

i. s'il n'y a pas d'intersection, on passe au $D_i$ suivant

ii. s'il y a une intersection I (référencé 18), et si $F(I).v \leq F(D_i).v$, c'est-à-dire si l'intersection I se trouve avant la position du point de travail $D_i$ le long de la ligne $F\{F(D_i).p\}$ par rapport à une origine $F(D_i).v=0$ de la ligne, on passe au $D_i$ suivant

iii. si $F(I).v > F(D_i).v$, c'est-à-dire si l'intersection I se trouve au-delà de la position du point de travail $D_i$ le long de la ligne $F\{F(D_i).p\}$ par rapport à l'origine $F(D_i).v=0$ de la ligne, et :

- si le produit scalaire $\vec{N_j}.\overrightarrow{F(I).n}$ est > 0, c'est-à-dire si la surface $S_j$ est une surface d'entrée de la ligne à l'intérieur de l'objet O', on modifie le compteur $F(D_i).c$ selon une modification d'entrée (typiquement on incrémente $F(D_i).c$ de 1 unité),
- sinon (si le produit scalaire $\vec{N_j}.\overrightarrow{F(I).n}$ est $\leq 0$, c'est-à-dire si la surface $S_j$ est une surface de sortie de la ligne à l'extérieur de l'objet O'), on modifie le compteur $F(D_i).c$ selon une modification de sortie de valeur opposée à la modification d'entrée (typiquement on décrémente $F(D_i).c$ de 1 unité)

Exemple détaillé d'un premier mode de réalisation de l'invention (figure 3)

On va maintenant décrire, en référence à la figure 3, un premier exemple de mise en oeuvre de procédé selon l'invention. On se place en vue de coupe, pour simplifier la description par rapport à une vue similaire à celle du figure 2). Dans cet exemple, l'espace E est donc à deux dimensions.

On cherche à savoir si les trois points de $D = \{D_1 ; D_2 ; ,D_3\}$ appartiennent à O. L'objet O est un rectangle composé des surfaces élémentaires $S_1$, $S_2$, $S_3$ et $S_4$. Par la suite, on appellera $I_i^j$ l'intersection de la ligne $F\{F(D_i).p\}$ avec la surface $S_j$. Le procédé selon l'invention comprend alors les étapes suivantes :

**1.** Initialisation de tous les $F(D_i).c$ à 0.

**2.** Calcul de tous les $F(D_i).v$

**3.** Traitement de $S_i$

    **a.** Traitement de $D_1$.

        i. Calcul de $I_1^1$ , qui existe

        ii. $F(I_1^1).v > F(D_1).v$

        iii. $\vec{N_1}.\overrightarrow{F(I_1^1).n}$ est < 0, donc on diminue $F(D_1).c$ de une unité

    **b.** Traitement de D2

        i. Calcul de $I_2^1$ , qui n'existe pas

**c.** Traitement de D3

    i. Calcul de $I_3^1$, qui n'existe pas

**4.** Traitement de $S_2$

    **a.** Traitement de $D_1$.

        i. Calcul de $I_1^2$, qui existe

        ii. $F(I_1^2).v > F(D_1).v$

        iii. $\vec{N}_2.\overrightarrow{F(I_1^2).n}$ est > 0, donc donc on augmente $F(D_1).c$ de une unité

    **b.** Traitement de $D_2$

        i. Calcul de $I_2^2$, qui n'existe pas

    **c.** Traitement de $D_3$

        i. Calcul de $I_3^2$, qui n'existe pas

**5.** Traitement de $S_3$

    **a.** Traitement de $D_1$.

        i. Calcul de $I_1^3$, qui n'existe pas

    **b.** Traitement de $D_2$

        i. Calcul de $I_2^3$, qui existe

        ii. $F(I_2^3).v > F(D_2).v$

        iii. $\vec{N}_3.\overrightarrow{F(I_2^3).n}$ est > 0, donc donc on augmente $F(D_2).c$ de une unité :

    **c.** Traitement de $D_3$

        i. Calcul de $I_3^3$, qui n'existe pas

**6.** Traitement de $S_4$

    **a.** Traitement de $D_1$.

        i. Calcul de $I_1^4$, qui n'existe pas

    **b.** Traitement de $D_2$

        i. Calcul de $I_2^4$, qui existe

        ii. $F(I_2^4).v < F(D_2).v$

    **c.** Traitement de $D_3$

        i. Calcul de $I_3^4$, qui n'existe pas

**7.** Etape finale de détermination : A la fin de l'exécution, on a :

**a.** $F(D_1).c = 0-1+1= 0$, donc $D_1$ n'appartient pas à O : le point D1 est à l'extérieur de l'objet O.
**b.** $F(D_2).c = 0+1= 1$, donc $D_2$ appartient à O: le point D2 est à l'intérieur de l'objet O.
**c.** $F(D_3).c = 0$, donc $D_3$ n'appartient pas à O: le point D3 est à l'extérieur de l'objet O.

Différences et avantages de l'invention par rapport à l'état de la technique antérieure

Pour savoir si un point de E appartient ou non à l'objet O ou O', on n'est pas obligé de calculer de structure intermédiaire (couche, empilement de voxel, etc.), car E peut être directement un espace à 3 dimensions.

Ainsi, si l'objet O est un objet 3D correspondant au produit 3D à fabriquer, il est possible de déterminer quel point de l'espace E est à l'intérieur de l'objet O selon le procédé selon l'invention, puis seulement après de découper cet objet O en couches à déposer les unes après les autres par stéréolithographie, ou dépôt de filament, ou autre. Cela permet notamment d'optimiser le découpage, notamment l'orientation du découpage, en fonction du résultat de la détermination de quel point est situé à l'intérieur ou à l'extérieur de l'objet O.

A l'inverse, il est possible de commencer à découper le produit 3D en couches, chacune des couches constituant alors un objet O à deux dimensions pour lequel on va chercher selon un procédé selon l'invention à déterminer quel point est à l'intérieur de l'objet O.

On ne réutilise pas non plus les résultats de ce calcul pour en déduire quoi que ce soit à propos d'autres points de E. Certes, certaines données sont utilisées dans plusieurs calculs, mais elles constituent les données initiales du problème. Le calcul d'intersection entre $F\{F(D_i).p\}$ et $S_j$ pour tout couple (i,j) fait bien intervenir plusieurs fois un élément j pour tous les éléments i, et inversement. Cependant, ces éléments intervenant plusieurs fois ne sont pas des résultats de calculs mais des données, ce qui fait qu'on n'a pas besoin de synchronisations complexes pour attendre des résultats, ni de séquençage particulier des instructions. Selon l'invention, il n'est pas nécessaire de stocker ou mémoriser l'existence ou les coordonnées des points d'intersections, qui ne sont donc pas stockées.

On remarque en comparant l'invention illustrée sur la figure 3 par rapport à l'état de la technique antérieure de la figure 1, que selon l'invention les lignes $F\{F(D_i).p\}$ peuvent être non parallèles. Dans ce cas, de manière préférentielle, l'ensemble des lignes $F\{F(D_i).p\}$ associés aux points $D_i$ ne se croisent pas à l'intérieur de l'espace E. En référence à la figure 3, le point A est donc situé à l'extérieur de l'espace E.

Une différence majeure par rapport à l'état de la technique antérieure est que selon l'invention chaque compteur est associé à un seul et unique point ou pixel ou voxel, alors que selon l'état de la technique antérieure chaque compteur est associé à un ensemble de pixels alignés sur une ligne 3. Chaque compteur associé à un point est distinct des compteurs associés aux autres points. Autrement dit, selon l'invention, on a au moins autant (autant pour le premier exemple de mode de réalisation voir le double pour le deuxième exemple de mode de réalisation décrit par la suite) de compteur que de point de travail, alors que selon l'état de la technique antérieure on a beaucoup moins de compteur que de points car un seul compteur peut être associé à plusieurs milliers de pixels alignés. Un avantage majeur du procédé selon l'invention est qu'il peut être extrêmement rapide à mettre en oeuvre. En effet, selon l'invention, on peut effectuer les calculs relatifs à chaque intersection d'une surface élémentaire $S_j$ avec une ligne passant par un point de travail $D_i$ :

- en parallèle dans le temps (c'est-à-dire simultanément ou sans attendre le résultat d'un autre calcul d'intersection) pour plusieurs voir toutes les surfaces élémentaires $S_j$, et/ou
- en parallèle dans le temps (c'est-à-dire simultanément ou sans attendre le résultat d'un autre calcul d'intersection) pour plusieurs voir tous les points de travail $D_i$.

Pour illustrer simplement cet avantage technique :

- selon l'état de la technique antérieure illustré sur la figure 1, comme décrit précédemment, on démarre d'une extrémité de la ligne 3 , et on se dirige vers l'autre bord de la section, en mettant à jour un compteur "nombre d'entrée/sortie dans la matière" ayant pour valeur initiale "0", et à chaque fois qu'on passe sur un pixel, on regarde l'état du compteur: s'il est supérieur à 0, on coche le pixel comme étant dans la matière, et inversement sinon. On comprendra donc aisément qu'il est nécessaire de faire les calculs et la détermination concernant le pixel 19 avant les calculs et la détermination concernant le pixel 20 : il est impossible de faire les calculs pour chaque pixel ou point indépendamment les uns des autres, et on doit nécessairement faire en série les uns après les autres les milliers de calculs correspondant aux milliers de pixels alignés sur une ligne 3.
- à l'inverse, selon le premier exemple de mode de réalisation de l'invention précédemment décrit en référence à la figure 3, plusieurs voir tous les calculs de recherche d'intersection et de détermination de la modification du compteur 3a, 3b, 3c, 4a, 4b, 4c, 5a, 5b, 5c, 6a, 6b, et 6c peuvent être effectuées en parallèle dans le temps, puis plusieurs voir toutes les étapes de détermination 7a, 7b et 7c de si le point de travail $D_1$, $D_2$ ou $D_3$ est à l'intérieur ou à l'extérieur de l'objet O peuvent être effectués en parallèle dans le temps.

L'invention est donc particulièrement bien adapté à une implémentation sous forme SIMD:

- Les tâches ou instructions du procédé selon l'invention (encodées au sein d'un programme ou d'un circuit analogique ou numérique dédié ou d'un microprocesseur dédié) pour la recherche d'intersection et la détermination de la modification du compteur sont communes à tous les couples point $D_i$ et surface $S_j$, et peuvent donc être effectuées en parallèles
- Les données pour ces tâches ou instructions ne dépendent d'aucune opération intermédiaire
- La synchronisation de ces tâches (une tâche représentant une seule étape d'itération, c'est-à-dire un seul ensemble [IVi et IVii et IViii] dans le mode de réalisation venant d'être décrit ou une seule étape VIII.i) ou VIII.ii) dans le mode de réalisation qui va être décrit par la suite) est triviale, par simple durée d'exécution fixe car la durée maximale de ces tâches est bornée (pas de boucle), et identique d'une opération à l'autre dès que l'opération a un résultat non trivial (c'est-à-dire dès qu'il existe une intersection qui implique de modifier un compteur).

Typiquement, voilà comment on procède pour la synchronisation. On définit une borne supérieure de temps, qui est égale à la durée maximale de ces tâches, c'est-à-dire qui est égale à une étape d'itération (numérotée IV dans le mode de réalisation venant d'être décrit ou VIII dans le mode de réalisation qui va être décrit par la suite) pour laquelle il existe une intersection qui implique de modifier un compteur. Après, voilà comment ça se déroule, typiquement au sein d'un processeur :

- au départ, on prépare suffisamment d'informations pour effectuer les (typiquement millions) "d'étapes d'itérations", puis
- on groupe ces étapes d'itérations par surface élémentaire, puis
- on déroule ces étapes d'itérations surface par surface, créant ainsi un grand nombre de petites tâches en file d'attente (typiquement: des millions) ; ces tâches sont réparties sur un nombre de noeuds de calcul (typiquement: des centaines) au fur et à mesure qu'on vide la file d'attente, puis
- lorsque tous les noeuds de calcul sont prêts on les lance tous ensemble. Chaque noeud traite une tâche élémentaire ; puis
- on attend la fin du calcul pour chaque noeud. On définit la durée d'une tâche élémentaire de manière fixe c'est-à-dire constante quelque que soit cette tâche élémentaire, et égale à la borne supérieure de temps. Comme chaque noeud exécute la même tâche sur des données différentes, on définit la durée d'un noeud de manière fixe c'est-à-dire constante quelque que soit le noeud considéré. Ainsi, tous les noeuds prennent le même temps pour s'exécuter, quel que soit le résultat (qu'il y ait une intersection ou pas, qu'on modifie le compteur de calcul ou pas), car on définit la durée d'un noeud de manière fixe. Ainsi, on « synchronise » les tâches ou itérations entre elles par durée d'exécution fixe ; puis
- on itère en re-remplissant les noeuds de calcul et en re-lançant leur exécution simultanée, jusqu'à ce que la file d'attente soit vide.

Il n'y a donc pas de synchronisation complexe qui nécessite de surveiller une fin d'exécution d'itération ou de calcul. On peut prédire le temps total en connaissant la taille de la file d'attente, sans connaître le résultat individuel des calculs, alors que ce serait nécessaire si la synchronisation était faite par attente de la fin d'exécution des calculs. Ainsi, l'invention va à l'encontre de l'état de la technique antérieure, qui incite à penser qu'il serait utile de dégager des noeuds dont les calculs sont triviaux (pas d'intersection) pour les réallouer à la suite de la file d'attente, en particulier dans le cas dans une machine MIMD. Grâce à l'invention, on peut fonctionner en SIMD, les noeuds triviaux ne sont pas libres, car ils sont forcés à exécuter simultanément l'instruction en cours de la tâche en cours de leur groupe SIMD. Cependant, les performances sont meilleures que si on réallouait les noeuds affectés à des tâches triviales à des tâches en attente.

Amélioration supplémentaire de l'invention

La connaissance de l'intérieur d'un produit 3D au sens purement mathématique est rarement suffisante pour la bonne fabrication du produit correspondant. Très souvent, des paramètres spécifiques au procédé font que cette information doit être légèrement adaptée. Par exemple en stéréolithographie, en référence à la figure 4, la profondeur de polymérisation 21 d'une couche 22 sur une autre couche 23 précédemment déposée est supérieure à l'épaisseur 24 de cette couche 22 telle que déposée, ceci pour assurer une bonne adhésion entre les couches (c'est la "surpolymérisation"). En référence à la figure 4, la conséquence est que la région solidifiée n'est pas forcément optimale du point de vue du respect des dimensions du produit 3D si on utilise exclusivement l'information décrivant la couche en cours de polymérisation. On voit, sur l'exemple de la figure 4 en coupe de profil pour lesquelles les couches successives sont horizontales, que moins les parois 33 du produit sont verticales, plus les erreurs 25, 26 et 27 de dimensions par rapport aux contours théoriques du produit à fabriquer sont importantes : pour une paroi verticale l'erreur 27 est nulle, pour une paroi proche de la verticale l'erreur 25 est faible, et pour une paroi proche de l'horizontale l'erreur 26 est importante.

La solution traditionnellement utilisée consiste à comparer les sections. C'est une opération complexe, décrite dans le brevet EP 0 555 369 B1. Elle est d'autant plus complexe qu'une information cruciale est perdue lorsqu'on ne manipule que des sections: en effet, l'erreur commise dépend typiquement de l'angle de la paroi par rapport à la verticale (cf. figure 4).

Une amélioration supplémentaire de l'invention permet pourtant de prendre en compte la surpolymérisation, pratiquement sans augmenter le temps de calcul, tout en gérant parfaitement des angles quelconques distribués aléatoirement sur le produit, et en restant facile à implémenter en SIMD.

Dans le cas particulier où pour chaque point $D_i$ la projection F est telle que $F\{F(D_i).p\}$ est une droite, au moins localement (c'est-à-dire dans la région de l'espace comprenant $D_i$ et O'), l'expression $\vec{N_j}.\overrightarrow{F(I).n}$ utilisée dans l'étape IV.iii décrite ci-dessus se réduit à l'expression $\vec{N_j}.\overrightarrow{F(D_i).n}$, que l'on peut pré calculer et tabuler avant même d'aborder l'étape IV. Si de plus F est telle que tous les $\overrightarrow{F(D_i).n}$ sont identiques (par exemple, si F est une projection orthographique), alors l'expression $\vec{N_j}.\overrightarrow{F(I).n}$ ne dépend plus que de $N_j$, c'est à dire de la surface $S_j$ en cours de traitement.

On peut alors réécrire l'opération IV ci-dessus sous la forme suivante, en l'appliquant à deux groupes de $S_j$ complémentaires, sans que cela aboutisse à un changement du temps d'exécution (c'est une réorganisation rédactionnelle des mêmes calculs). Si on note N les différents $\overrightarrow{F(D_i).n}$ (tous identiques par hypothèse), on a maintenant, à la place de l'étape IV précédemment décrite, les étapes suivantes:

**IV.** Pour tout élément $S_j$ appartenant à O', on note sa normale $N_j$ et on divise O' en deux nouveaux sous-ensembles complémentaires $O^+$ et $O^-$ tels :

    i. que le sous ensemble $O^+$ contienne toutes les $S_j$ (notées $S_j^+$ ) de O' dont le produit scalaire $N_j.N$ est positif ou nul, les surfaces élémentaires $S_j^+$ étant donc des surfaces d'entrée à l'intérieur de l'objet O', et

    ii. que le sous ensemble $O^-$ contienne toutes les $S_j$ (notées $S_j^-$ ) de O' dont le produit scalaire $N_j.N$ est négatif, les surfaces élémentaires $S_j^-$ étant donc des surfaces de sortie à l'extérieur de l'objet O'.

**V.** Pour tout élément $S_j$ appartenant à $O^+$ et pour tout $D_i$ appartenant à D, on calcule l'intersection entre $F\{F(D_i).p\}$ et $S_j$ (rastérisation).

    i. s'il y a une intersection I, et si $F(I).v > F(D_i).v$, on incrémente $F(D_i).c$ de 1

**VI.** Pour tout élément $S_j$ appartenant à $O^-$ et pour tout $D_i$ appartenant à D, on calcule l'intersection entre $F\{F(D_i).p\}$ et $S_j$ (rastérisation).

    i. s'il y a une intersection I, et si $F(I).v > F(D_i).v$, on décrémente $F(D_i).c$ de 1

L'idée consiste à ne plus utiliser un seul ensemble D de points, mais deux, notés $D^+$ et $D^-$, et d'appliquer les traitements relatifs à $O^+$ et $O^-$ sur leur ensemble respectif. En choisissant $D^+$ et $D^-$ judicieusement, on peut calculer des compensations spécifiques au procédé.

Prenons par exemple le problème de la surpolymérisation dans la stéréolithographie, en référence à la figure 5. L'impact du faisceau solidifie une partie du liquide, selon une forme dépendant de l'angle d'incidence et une profondeur dépendant de la puissance. On définit l'ensemble $D^+$ (référencé 28) comme celui des points de travail, qui se situent à la surface du liquide d'une couche, et l'ensemble $D^-$ (référencé 29) comme l'ensemble de points à l'extrémité basse des zones polymérisées. Ainsi, à chaque point $D_i$ de $D^+$, appelé désormais $D_i^+$ (référencé 30), correspond un point $D_i^-$ (référencé 31) de $D^-$ qui est une image de $D_i^+$ par translation de $D_i^+$ vers le bas selon la direction de séparation entre deux couches de stéréolithographie et selon la profondeur de polymérisation 32 d'une couche. Du point de vue de l'algorithme, rien n'impose que $D^+$ et $D^-$ soient plans, mais dans l'exemple considéré, on a $D^+$ dans le plan de la surface du liquide, et $D^-$ une surface très légèrement courbée, qui pourrait même être approximée par un plan pour certaines machines dont le dispositif optique s'y prête.

On modifie alors légèrement l'algorithme, qui prend maintenant la forme suivante:

$$O : O' = \bigcup_j S_j$$

**I.** De manière optionnelle, on détermine un sous-ensemble O' de , de sorte que la description de l'objet O' a pour forme une décomposition de l'objet O' en plusieurs surfaces élémentaires $S_j$ sélectionnées parmi les $S_i$, orientées et de préférence planes :

- soit en gardant O' = O (dans ce cas là l'ensemble des $S_j$ correspond à l'ensemble des $S_i$, et il suffit de remplacer $S_j$ par $S_i$ et O' par O dans la suite de la description),
- soit optionnellement en effectuant un filtre:

  i. on détermine une région minimale R de P contenant tous les $F(D_i^+).p$
  ii. on détermine le sous-ensemble O' de O tel qu'un élément de O ne faisant pas partie de O' n'a pas de projection par F sur P appartenant à R. Cette étape de tri est utilisée classiquement en informatique pour réduire la durée d'un calcul en l'appliquant localement à un sous-ensemble plus petit (ici les seuls éléments de O qui peuvent avoir une projection dans R).

**II.** On construit l'ensemble D⁻ de points images $D_i^-$ à partir de l'ensemble D⁺ de points $D_i^+$ ayant une projection par F et dont on veut savoir individuellement s'ils doivent être sélectionnés pour la fabrication du produit, selon une loi spécifique du procédé de fabrication impliquant la présence simultanée dans l'objet O' du point considéré $D_i^+$ et d'un point dérivé (ou image) $D_i^-$ (typiquement par translation de chaque $D_i^+$ selon la profondeur de polymérisation comme précédemment décrit). On note D⁻ l'ensemble constitué des points dérivés (ou images) $D_i^-$ de chacun des points $D_i^+$ de D⁺.

**III.** pour tout élément $D_i^+$ appartenant à D⁺, c'est-à-dire pour chaque point de travail $D_i^+$ pour lequel on cherche à déterminer s'il est à l'intérieur ou à l'extérieur de l'objet O', on calcule ou détermine :

- une ligne $F\{F(D_i^+).p\}$ passant par le point de travail $D_i^+$, et
- $F(D_i^+).v$ la coordonnée curviligne du point de travail $D_i^+$ le long de $F\{F(D_i^+).p\}$.

**IV.** à tout $D_i^+$ pour lequel on cherche à déterminer s'il est à l'intérieur ou à l'extérieur de l'objet O', et donc à toute ligne $F\{F(D_i^+).p\}$, on associe un compteur, noté $F(D_i^+).c$, dédié uniquement à ce point de travail $D_i^+$. La valeur de ce compteur est initialisée à 0

**V.** pour tout point image $D_i^-$ appartenant à D⁻, on calcule ou détermine :

- une ligne $F\{F(D_i^-).p\}$ passant par le point $D_i^-$ dérivé ou image de $D_i^+$, confondue avec la ligne $F\{F(D_i^+).p\}$, et
- $F(D_i^-).v$ la coordonnée curviligne du point $D_i^-$ le long de $F\{F(D_i^-).p\}$

**VI.** à tout $D_i^-$, et donc à toute ligne $F\{F(D_i^-).p\}$, on associe un compteur, noté $F(D_i^-).c$, , dédié uniquement à ce point dérivé ou image $D_i^-$. La valeur de ce compteur est initialisée à 0.

**VII.** Pour tout élément $S_j$ appartenant à O', on note sa normale $N_j$ et on crée deux nouveaux sous-ensembles O⁺ et O⁻ tels que O⁺ contienne les $S_j$ de O' dont le produit scalaire $N_j.N$ est positif ou nul, et O⁻ tous les autres. Autrement dit, on sépare les surfaces élémentaires en deux groupes distincts, un groupe O⁺ de surfaces $S_j^+$ d'entrée dans l'objet O' et un groupe O⁻ de surfaces $S_j^-$ de sortie de l'objet O', l'entrée et la sortie dans l'objet O' étant définie par rapport à une direction de déplacement 32.

**VIII.** Après, on itère sur chacune des surfaces élémentaires $S_j$ les opérations suivantes :

i) Pour tout élément $S_j$ appartenant à O$^+$ c'est-à-dire si la surface $S_j$ est une surface d'entrée $S_j^+$ , et pour tout $D_i^+$ appartenant à D$^+$, on recherche et calcule l'intersection entre cette surface élémentaire $S_j^+$ et la ligne $F\{F(D_i^+).p\}$ passant par le point de travail $D_i^+$ . En outre, s'il cette intersection I existe, et si $F(I).v > F(D_i^+).v$ , on modifie le compteur $F(D_i^+).c$ selon une modification de passage à travers la surface (typiquement on incrémente $F(D_i^+).c$ de une unité)

ii) Pour tout élément $S_j$ appartenant à O$^-$ c'est-à-dire si la surface $S_j$ est une surface de sortie $S_j^-$ , et pour tout $D_i^-$ appartenant à D$^-$, on recherche et calcule l'intersection entre cette surface élémentaire $S_j^-$ et la ligne $F\{F(D_i^-).p\}$ passant par le point image $D_i^-$ . En outre, si cette intersection I existe, et si $F(I).v > F(D_i^-).v$ , on modifie le compteur $F(D_i^-).c$ selon la modification de passage à travers la surface (typiquement on incrémente $F(D_i^-).c$ de 1).

**IX.** Pour chaque point de travail $D_i^+$ , on détermine si ce point de travail $D_i^+$ est à l'intérieur ou à l'extérieur de l'objet O' en fonction du compteur dédié au point de travail $D_i^+$ et du compteur dédié à l'image $D_i^-$ du point de travail. Plus exactement, pour chaque point de travail $D_i^+$ , on détermine si ce point de travail $D_i^+$ est à l'intérieur ou à l'extérieur de l'objet O' par comparaison du compteur dédié au point de travail $D_i^+$ et du compteur dédié à l'image $D_i^-$ du point de travail. On sélectionne :

- les $D_i^+$ satisfaisant la condition " $F(D_i^+).c > F(D_i^-).c$ " comme étant des points de travail situés à l'intérieur de l'objet O',

- les autres points $D_i^+$ (pour lesquels $F(D_i^+).c \leq F(D_i^-).c$ ) comme étant des points de travail situés à l'extérieur de l'objet O'.

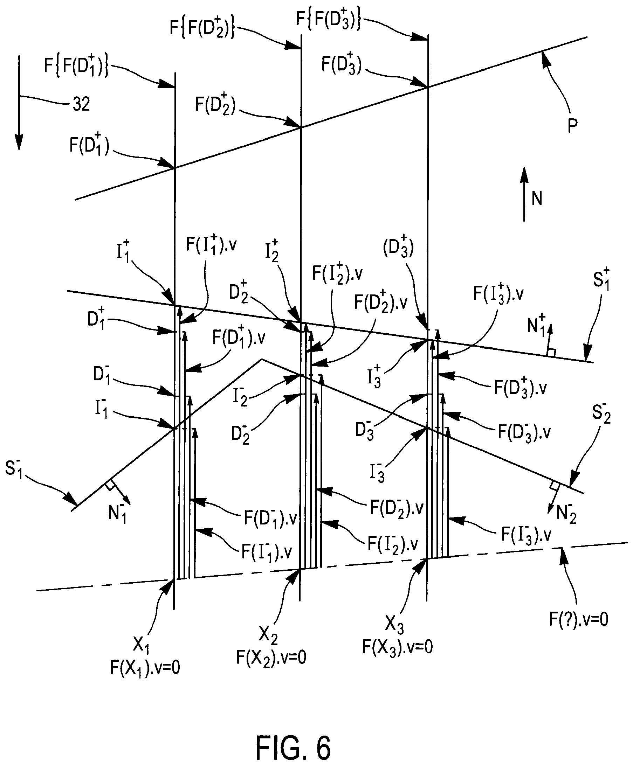

Exemple détaillé (figure 6)

En référence à la figure 6, une vue en coupe montre comment on peut mettre à profit ce procédé selon l'invention amélioré pour ne polymériser un point $D_i^+$ que si $D_i^+$ et son $D_i^-$ correspondant sont tous deux dans la matière. Le procédé selon l'invention comprend dans cet exemple les étapes suivantes :

1. Initialisation de tous les $F(D_i^+).c$ à 0.

2. Calcul de tous les $F(D_i^+).v$

3. Initialisation de tous les $F(D_i^-).c$ à 0.

4. Calcul de tous les $F(D_i^-).v$

5. Traitement de $S_1^+$

a. Traitement de $D_1^+$.

i. $F(I_1^+).v > F(D_1^+).v$, donc on augmente $F(D_1^+).c$ de 1

b. Traitement de $D_2^+$

i. $F(I_2^+).v > F(D_2^+).v$, donc on augmente $F(D_2^+).c$ de 1

c. Traitement de $D_3^+$

i. $F(I_3^+).v < F(D_3^+).v$, donc $F(D_3^+).c$ inchangé

6. Traitement de $S_1^-$

a. Traitement de $D_1^-$.

i. $F(I_1^-).v < F(D_1^-).v$, donc $F(D_1^-).c$ inchangé

b. Traitement de $D_2^-$

i. Pas d'intersection entre $S_1^-$ et $F\{F(D_2^-).p\}$

c. Traitement de $D_3^-$

i. Pas d'intersection entre $S_1^-$ et $F\{F(D_3^-).p\}$

7. Traitement de $S_2^-$

a. Traitement de $D_1^-$.

i. Pas d'intersection entre $S_2^-$ et $F\{F(D_1^-).p\}$

b. Traitement de $D_2^-$

i. $F(I_2^-).v > F(D_2^-).v$, donc on augmente $F(D_2^-).c$ de 1

c. Traitement de $D_3^-$

i. $F(I_3^-).v < F(D_3^-).v$, donc $F(D_3^-).c$ inchangé

A la fin de l'exécution, on a :

- $(F(D_1^+).c = 0+1 = 1) > (F(D_1^-).c = 0)$, donc D₁ est sélectionné comme étant situé à l'intérieur de l'objet O.

- $(F(D_2^+).c = 0+1 = 1) = (F(D_2^-).c = 0+1 = 1)$, donc D₂ n'est pas sélectionné comme étant situé à l'intérieur de l'objet O.

- $(F(D_3^+).c = 0) = (F(D_3^-).c = 0)$, donc D₃ n'est pas sélectionné comme étant situé à l'intérieur de l'objet O.

Bien sûr, l'invention n'est pas limitée aux exemples qui viennent d'être décrits et de nombreux aménagements peuvent être apportés à ces exemples sans sortir du cadre de l'invention.

**Revendications**

1. Procédé pour fabriquer un produit, comprenant :

   - une détermination de si des points d'un ensemble de points (11, 30) d'une portion d'un espace fini sont à l'intérieur ou à l'extérieur d'un objet (14, 6), la portion de l'espace fini comprenant ledit objet, ledit objet correspondant au produit à fabriquer ou à une partie ou couche ou tranche du produit à fabriquer, et
   - une fabrication du produit à partir de la détermination de si chaque point parmi l'ensemble de points est à l'intérieur ou à l'extérieur de l'objet, un point déterminé comme étant à l'intérieur de l'objet correspondant à un point qui doit être dans une matière du produit à fabriquer ;

   ledit objet étant décomposé en surfaces élémentaires (15), une réunion des surfaces élémentaires formant ledit objet, et en ce que pour chaque point (11, 30) parmi l'ensemble de points pour lesquels on cherche à déterminer s'ils sont à l'intérieur ou à l'extérieur de l'objet, le procédé comprend :

   - une détermination d'au moins une ligne (12) passant par ce point (11, 30) auquel est associé un compteur dédié uniquement à ce point, et
   - une itération, sur chacune des surfaces élémentaires, des opérations suivantes :

     • une recherche d'une intersection entre la surface élémentaire (15) et la ligne (12) passant par le point (11, 30),

       ◦ une modification du compteur si l'intersection existe, et

   - une détermination de si le point est à l'intérieur ou à l'extérieur de l'objet en fonction de la valeur du compteur dédié uniquement au point (11, 30)

   chacune des étapes précédentes étant mise en oeuvre par au moins un ordinateur, une unité centrale ou de calcul, un circuit électronique analogique, un circuit électronique numérique, un microprocesseur, et/ou des moyens logiciels,.

2. Procédé selon la revendication 1, **caractérisé en ce que** la ligne passe par une origine, et **en ce que** la modification du compteur comprend :

   • Si l'intersection est située au-delà du point par rapport à l'origine de la ligne, pas de modification du compteur, et
   • Si l'intersection est située non au-delà du point par rapport à l'origine de la ligne, une modification du compteur de façon différente selon que l'intersection de la ligne correspond à une entrée de la ligne dans l'objet ou une sortie de la ligne hors de l'objet par rapport à l'origine.

3. Procédé selon la revendication 1, dans lequel l'objet correspond à une couche polymérisée du produit à fabriquer,

   le procédé comprenant en outre, pour le point considéré :

   - une détermination d'une ligne passant par une image du point confondue avec la ligne passant par le point, à laquelle est associé un compteur dédié uniquement à cette image du point, ladite image du point étant une image dérivée du point par une translation dudit point selon la direction de séparation entre deux couches de stéréolithographie selon une profondeur de polymérisation de la couche,

   ladite itération comprenant une itération, sur chacune des surfaces élémentaires, les surfaces élémentaires étant séparées en deux groupes distincts, un groupe de surfaces d'entrée dans l'objet et un groupe de surfaces de sortie de l'objet par rapport à une direction de déplacement fixé le long de la ligne, des opérations suivantes :

   • si la surface est une surface d'entrée, une recherche d'une intersection entre cette surface élémentaire et la ligne passant par le point et une modification du compteur associé au point si l'intersection existe,
   • si la surface est une surface de sortie, une recherche d'une intersection entre cette surface élémentaire et la ligne passant par l'image du point, et une modification du compteur associé à l'image du point si l'intersection existe,

ladite détermination de si le point est à l'intérieur ou à l'extérieur de l'objet comprenant une détermination de la présence simultanée du point et du point image à l'intérieur de l'objet en fonction du compteur dédié au point et du compteur dédié à l'image du point.

4. Procédé selon la revendication 3, **caractérisé en ce que** la détermination de si le point est à l'intérieur ou à l'extérieur de l'objet en fonction du compteur dédié au point et du compteur dédié à l'image du point comprend une comparaison du compteur dédié au point et du compteur dédié à l'image du point.

5. Procédé selon la revendication 3 ou 4, **caractérisé en ce que** pour l'ensemble des points et des images des points, les lignes passant par ces points sont parallèles.

6. Procédé selon l'une quelconque des revendications 1 à 4, **caractérisé en ce que** pour l'ensemble des points et des images des points, les lignes passant par ces points ne sont pas parallèles.

7. Procédé selon l'une quelconque des revendications précédentes, **caractérisé en ce que** l'espace est un espace à trois dimensions.

8. Procédé selon la revendication 7, **caractérisé en ce que** les points (11) sont regroupés dans une surface (36), et **en ce que** chaque ligne (12) passant par un point et chaque ligne passant par une image d'un point est transversale à cette surface (36) par ce point (11).

9. Procédé selon la revendication 8, **caractérisé en ce que** la surface (36) correspond à une couche ou au moins à une partie d'une couche à déposer pour fabriquer le produit par prototypage rapide.

10. Procédé selon l'une quelconque des revendications 1 à 6, **caractérisé en ce que** l'espace est un espace à deux dimensions.

11. Procédé selon l'une quelconque des revendications précédentes, **caractérisé en ce que** l'étape d'itération est effectuée en parallèle dans le temps pour plusieurs surfaces élémentaires.

12. Procédé selon l'une quelconque des revendications précédentes, **caractérisé en ce que** pour au moins une surface élémentaire, l'étape d'itération est effectuée en parallèle dans le temps pour plusieurs points.

13. Procédé selon l'une quelconque des revendications 11 ou 12, **caractérisé en ce que** les étapes d'itérations effectuées en parallèles sont synchronisées par durée d'exécution fixe.

14. Dispositif pour fabriquer un produit mettant en oeuvre un procédé selon l'une quelconque des revendications précédentes, comprenant :

   - des moyens pour déterminer si des points d'un ensemble de points d'une portion d'un espace fini sont à l'intérieur ou à l'extérieur d'un objet, la portion de l'espace fini comprenant ledit objet, ledit objet correspondant au produit à fabriquer ou à une partie du produit à fabriquer, et
   - des moyens pour fabriquer le produit à partir de la détermination de si chaque point parmi l'ensemble de points est à l'intérieur ou à l'extérieur de l'objet, un point déterminé comme étant à l'intérieur de l'objet correspondant à un point qui se trouve dans une matière du produit à fabriquer

   ledit objet étant décomposé en surfaces élémentaires, une réunion des surfaces élémentaires formant ledit objet, et en ce que pour chaque point parmi l'ensemble de points pour lesquels on cherche à déterminer s'ils sont à l'intérieur ou à l'extérieur de l'objet, le dispositif comprend

   - des moyens pour déterminer une ligne passant par ce point auquel est associé un compteur dédié uniquement à ce point, et
   - des moyens pour itérer, sur chacune des surfaces élémentaires, les opérations suivantes :

      • une recherche d'une intersection entre la surface élémentaire et la ligne passant par le point,
      • une modification du compteur si l'intersection existe, et

   - des moyens pour déterminer si le point est à l'intérieur ou à l'extérieur de l'objet en fonction du compteur dédié uniquement au point,

chacun des moyens précédents comprenant au moins un ordinateur, une unité centrale ou de calcul, un circuit électronique analogique, un circuit électronique numérique, un microprocesseur, et/ou des moyens logiciels.

15. Dispositif selon la revendication 14, dans lequel l'objet correspond à une couche polymérisée du produit à fabriquer, le dispositif comprend en outre, pour le point de travail considéré :

- des moyens pour déterminer une ligne passant par une image du point confondue avec la ligne passant par le point, à laquelle est associé un compteur dédié uniquement à cette image du point, ladite image du point étant une image dérivée du point par une translation dudit point selon la direction de séparation entre deux couches de stéréolithographie selon une profondeur de polymérisation de la couche,

les moyens pour itérer étant configurés pour itérer, sur chacune des surfaces élémentaires, les surfaces élémentaires étant séparées en deux groupes distincts, un groupe de surfaces d'entrée dans l'objet et un groupe de surfaces de sortie de l'objet par rapport à une direction de déplacement fixée le long de la ligne, les opérations suivantes :

• une recherche d'une intersection entre la surface élémentaire et une seule des lignes parmi la ligne passant par le point et la ligne passant par l'image du point,
• une modification du compteur si l'intersection existe, et
• si la surface est une surface de sortie, une recherche d'une intersection entre cette surface élémentaire et la ligne passant par l'image du point, et une modification du compteur associé à l'image du point si l'intersection existe, et

les moyens pour déterminer si le point est à l'intérieur ou à l'extérieur de l'objet étant configurés pour déterminer la présence simultanée du point et de l'image à l'intérieur de l'objet à l'intérieur de l'objet en fonction du compteur dédié au point et du compteur dédié à l'image du point.

**Patentansprüche**

1. Verfahren zur Herstellung eines Produkts, umfassend:

- eine Bestimmung davon, ob Punkte einer Reihe von Punkten (11, 30) eines Abschnitts eines endlichen Raumes innerhalb oder außerhalb eines Objektes (14, 6) liegen, wobei der Abschnitt des endlichen Raumes das Objekt umfasst, das Objekt dem herzustellenden Produkt oder einem Teil oder einer Schicht oder Tranche des herzustellenden Produkts entspricht, und
- eine Herstellung des Produkts ausgehend von der Bestimmung davon, ob jeder Punkt der Reihe von Punkten innerhalb oder außerhalb des Objektes liegt, wobei ein Punkt, der als innerhalb des Objekts liegend bestimmt wird, einem Punkt entspricht, der in einem Stoff des herzustellenden Produkts sein muss;

wobei das Objekt in elementare Oberflächen (15) zergliedert ist, eine Vereinigung der elementaren Oberflächen das Objekt bildet, und dadurch, dass das Verfahren für jeden Punkt (11, 30) aus der Reihe von Punkten, für die zu bestimmen versucht wird, ob sie innerhalb oder außerhalb des Objektes liegen, Folgendes umfasst:

- eine Bestimmung mindestens einer Linie (12), die durch diesen Punkt (11, 30) verläuft, dem ein Zähler zugewiesen ist, der nur diesem Punkt gewidmet ist, und
- eine Iteration auf jeder der elementaren Oberflächen der folgenden Vorgänge:

• einer Suche nach einem Schnittpunkt zwischen der elementaren Oberfläche (15) und der Linie (12), die durch den Punkt (11, 30) verläuft,

o einer Änderung des Zählers, wenn der Schnittpunkt existiert, und

- eine Bestimmung davon, ob der Punkt innerhalb oder außerhalb des Objektes liegt, in Abhängigkeit von dem Wert des Zählers, der nur dem Punkt (11, 30) gewidmet ist

wobei jeder der vorangehenden Schritte durch mindestens einen Computer, eine Zentral- oder Recheneinheit, eine analoge elektronische Schaltung, eine digitale elektronische Schaltung, einen Mikroprozessor und/oder Softwaremittel umgesetzt wird.

2. Verfahren nach Anspruch 1, **dadurch gekennzeichnet, dass** die Linie durch einen Ursprung verläuft und dadurch, dass die Änderung des Zählers umfasst:

   • Wenn sich der Schnittpunkt jenseits des Punktes in Bezug auf den Ursprung der Linie befindet, keine Änderung des Zählers, und
   • Wenn sich der Schnittpunkt nicht jenseits des Punktes in Bezug auf den Ursprung der Linie befindet, eine Änderung des Zählers auf unterschiedliche Art und Weise, je nachdem, ob der Schnittpunkt der Linie einem Eingang der Linie in das Objekt oder einem Ausgang der Linie aus dem Objekt heraus in Bezug auf den Ursprung entspricht.

3. Verfahren nach Anspruch 1, wobei das Objekt einer polymerisierten Schicht des herzustellenden Produkts entspricht,

   wobei das Verfahren weiter für den betrachteten Punkt Folgendes umfasst:

   - eine Bestimmung einer Linie, die durch eine Abbildung des Punktes verläuft, die mit der Linie zusammenfällt, die durch den Punkt verläuft, der ein Zähler zugewiesen ist, der nur dieser Abbildung des Punktes gewidmet ist, wobei die Abbildung des Punktes eine abgeleitete Abbildung des Punktes durch eine Translation des Punktes in der Trennungsrichtung zwischen zwei Schichten einer Stereolithographie entlang einer Polymerisationstiefe der Schicht ist,

   wobei die Iteration eine Iteration, auf jeder der elementaren Oberflächen, wobei die elementaren Oberflächen in zwei unterschiedliche Gruppen getrennt sind, eine Gruppe an Eingangsoberflächen in das Objekt und eine Gruppe an Ausgangsoberflächen aus dem Objekt in Bezug auf eine Bewegungsrichtung, die entlang der Linie fixiert ist, der folgenden Vorgänge umfasst:

   • wenn die Oberfläche eine Eingangsoberfläche ist, eine Suche nach einem Schnittpunkt zwischen dieser elementaren Oberfläche und der Linie, die durch den Punkt verläuft, und eine Änderung des Zählers, der dem Punkt zugewiesen ist, wenn der Schnittpunkt existiert,
   • wenn die Oberfläche eine Ausgangsoberfläche ist, eine Suche nach einem Schnittpunkt zwischen dieser elementaren Oberfläche und der Linie, die durch die Abbildung des Punktes verläuft, und eine Änderung des Zählers, der der Abbildung des Punktes zugewiesen ist, wenn der Schnittpunkt existiert,

   wobei die Bestimmung davon, ob der Punkt innerhalb oder außerhalb des Objektes liegt, eine Bestimmung des gleichzeitigen Vorhandenseins des Punktes und des Abbildungspunktes im Inneren des Objektes in Abhängigkeit von dem Zähler, der dem Punkt gewidmet ist, und dem Zähler, der der Abbildung des Punktes gewidmet ist, umfasst.

4. Verfahren nach Anspruch 3, **dadurch gekennzeichnet, dass** die Bestimmung davon, ob der Punkt innerhalb oder außerhalb des Objektes liegt, in Abhängigkeit von dem Zähler, der dem Punkt gewidmet ist, und dem Zähler, der der Abbildung des Punktes gewidmet ist, einen Vergleich des Zählers, der dem Punkt gewidmet ist, und des Zählers, der der Abbildung des Punktes gewidmet ist, umfasst.

5. Verfahren nach Anspruch 3 oder 4, **dadurch gekennzeichnet, dass** für die Reihe der Punkte und der Abbildungen der Punkte, die Linien, die durch diese Punkte verlaufen, parallel sind.

6. Verfahren nach einem der Ansprüche 1 bis 4, **dadurch gekennzeichnet, dass** für die Reihe der Punkte und der Abbildungen der Punkte, die Linien, die durch diese Punkte verlaufen, nicht parallel sind.

7. Verfahren nach einem der vorstehenden Ansprüche, **dadurch gekennzeichnet, dass** der Raum ein dreidimensionaler Raum ist.

8. Verfahren nach Anspruch 7, **dadurch gekennzeichnet, dass** die Punkte (11) in einer Oberfläche (36) zusammengefasst sind, und dadurch, dass jede Linie (12), die durch einen Punkt verläuft, und jede Linie, die durch eine Abbildung eines Punktes verläuft, quer zu dieser Oberfläche (36) durch diesen Punkt (11) ist.

9. Verfahren nach Anspruch 8, **dadurch gekennzeichnet, dass** die Oberfläche (36) einer Schicht oder mindestens einem Teil einer Schicht, die abzuscheiden ist, entspricht, um das Produkt durch schnelle Prototypenherstellung herzustellen.

10. Verfahren nach einem der Ansprüche 1 bis 6, **dadurch gekennzeichnet, dass** der Raum ein zweidimensionaler Raum ist.

11. Verfahren nach einem der vorstehenden Ansprüche, **dadurch gekennzeichnet, dass** der Iterationsschritt innerhalb der Zeit parallel für mehrere elementare Oberflächen ausgeführt wird.

12. Verfahren nach einem der vorstehenden Ansprüche, **dadurch gekennzeichnet, dass** der Iterationsschritt für mindestens eine elementare Oberfläche innerhalb der Zeit parallel für mehrere Punkte ausgeführt wird.

13. Verfahren nach einem der Ansprüche 11 oder 12, **dadurch gekennzeichnet, dass** die parallel ausgeführten Iterationsschritte durch eine feststehende Ausführungsdauer synchronisiert sind.

14. Vorrichtung zur Herstellung eines Produkts, das ein Verfahren nach einem der vorstehenden Ansprüche umsetzt, Folgendes umfassend:

- Mittel zum Bestimmen, ob Punkte einer Reihe von Punkten eines Abschnitts eines endlichen Raumes innerhalb oder außerhalb eines Objektes liegen, wobei der Abschnitt des endlichen Raumes das Objekt umfasst, das Objekt dem herzustellenden Produkt oder einem Teil des herzustellenden Produkts entspricht, und
- Mittel zum Herstellen des Produkts ausgehend von der Bestimmung davon, ob jeder Punkt der Reihe von Punkten innerhalb oder außerhalb eines Objektes liegt, wobei ein Punkt, der als innerhalb des Objekts liegend bestimmt wird, einem Punkt entspricht, der sich in einem Stoff des herzustellenden Produkts befindet;

wobei das Objekt in elementare Oberflächen zergliedert ist, eine Vereinigung der elementaren Oberflächen das Objekt bildet, und dadurch, dass die Vorrichtung für jeden Punkt aus der Reihe von Punkten, für die zu bestimmen versucht wird, ob sie innerhalb oder außerhalb des Objektes liegen, Folgendes umfasst:

- Mittel zum Bestimmen einer Linie, die durch diesen Punkt verläuft, dem ein Zähler zugewiesen ist, der nur diesem Punkt gewidmet ist, und
- Mittel zum Iterieren auf jeder der elementaren Oberflächen der folgenden Vorgänge:

• einer Suche nach einem Schnittpunkt zwischen der elementaren Oberfläche und der Linie, die durch den Punkt verläuft,
• einer Änderung des Zählers, wenn der Schnittpunkt existiert, und

- Mittel zum Bestimmen, ob der Punkt innerhalb oder außerhalb des Objektes liegt, in Abhängigkeit von dem Wert des Zählers, der nur dem Punkt gewidmet ist,

wobei jedes der vorangehenden Mittel mindestens einen Computer, eine Zentral- oder Recheneinheit, eine analoge elektronische Schaltung, eine digitale elektronische Schaltung, einen Mikroprozessor und/oder Softwaremittel umfasst.

15. Vorrichtung nach Anspruch 14, wobei das Objekt einer polymerisierten Schicht des herzustellenden Produkts entspricht, wobei die Vorrichtung weiter für den betrachteten Arbeitspunkt Folgendes umfasst:

- Mittel zum Bestimmen einer Linie, die durch eine Abbildung des Punktes verläuft, die mit der Linie zusammenfällt, die durch den Punkt verläuft, der ein Zähler zugewiesen ist, der nur dieser Abbildung des Punktes gewidmet ist, wobei die Abbildung des Punktes eine abgeleitete Abbildung des Punktes durch eine Translation des Punktes in der Trennungsrichtung zwischen zwei Schichten einer Stereolithographie entlang einer Polymerisationstiefe der Schicht ist,

wobei die Mittel zum Iterieren konfiguriert sind, um auf jeder der elementaren Oberflächen, wobei die elementaren Oberflächen in zwei unterschiedliche Gruppen getrennt sind, eine Gruppe an Eingangsoberflächen in das Objekt und eine Gruppe an Ausgangsoberflächen aus dem Objekt in Bezug auf eine Bewegungsrichtung, die entlang der Linie fixiert ist, die folgenden Vorgänge zu iterieren:

• eine Suche nach einem Schnittpunkt zwischen der elementaren Oberfläche und einer einzigen der Linien, aus der Linie, die durch den Punkt verläuft, und der Linie, die durch die Abbildung des Punktes verläuft,

• eine Änderung des Zählers, wenn der Schnittpunkt existiert, und

• wenn die Oberfläche eine Ausgangsoberfläche ist, eine Suche nach einem Schnittpunkt zwischen dieser elementaren Oberfläche und der Linie, die durch die Abbildung des Punktes verläuft, und eine Änderung des Zählers, der der Abbildung des Punktes zugewiesen ist, wenn der Schnittpunkt existiert, und

wobei die Mittel zum Bestimmen, ob der Punkt innerhalb oder außerhalb des Objektes liegt, konfiguriert sind, um das gleichzeitige Vorhandensein des Punktes und der Abbildung im Inneren des Objektes im Inneren des Objektes im Inneren des Objektes in Abhängigkeit von dem Zähler, der dem Punkt gewidmet ist, und dem Zähler, der der Abbildung des Punktes gewidmet ist, zu bestimmen.

**Claims**

1.  Method for manufacturing a product, comprising:

    - a determination as to whether points in a set of points (11, 30) of a portion of a finite space are inside or outside an object (14, 6), the portion of the finite space comprising said object, said object corresponding to the product to be manufactured or to a part or layer or slice of the product to be manufactured, and
    - a manufacture of the product from the determination as to whether each point among the set of points is inside or outside the object, a point determined as being inside the object corresponding to a point that must be in a material of the product to be manufactured;

    said object being broken down into elementary surfaces (15), a combination of the elementary surfaces forming said object, and in that, for each point (11, 30) among the set of points for which it is sought to determine whether they are inside or outside the object, the method comprises:

    - a determination of at least one line (12) passing through this point (11, 30) with which a counter dedicated solely to this point is associated, and
    - an iteration, on each of the elementary surfaces, of the following operations:

        • a search for an intersection between the elementary surface (15) and the line (12) passing through the point (11, 30),

            ◦ a modification of the counter if the intersection exists, and

        - a determination as to whether the point is inside or outside the object according to the value of the counter dedicated solely to the point (11, 30)

    each of the previous steps being implemented by at least one computer, a central or computing unit, an analogue electronic circuit, a digital electronic circuit, a microprocessor, and/or software means.

2.  Method according to claim 1, **characterised in that** the line passes through an origin, and **in that** the modification of the counter comprises:

    • if the intersection is located beyond the point with respect to the origin of the line, no modification of the counter, and
    • if the intersection is located not beyond the point with respect to the origin of the line, a modification of the counter in a different manner depending on whether the intersection of the line corresponds to an entry of the line into the object or an exit of the line out of the object with respect to the origin.

3.  Method according to claim 1, wherein the object corresponds to a polymerised layer of the product to be manufactured, the method furthermore comprising, for the point in question:

    - a determination of a line passing through an image of the point coincident with the line passing through the point, with which a counter dedicated solely to this image of the point is associated, said image of the point being an image derived from the point by a translation of said point in the direction of separation between two stereolithography layers according to the depth of polymerisation of the layer,

said iteration comprising an iteration, on each of the elementary surfaces, the elementary surfaces being separated into two distinct groups, a group of surfaces of entry into the object and a group of surfaces of exit from the object with respect to a direction of movement fixed along the line, of the following operations:

• if the surface is an entry surface, a search for an intersection between this elementary surface and the line passing through the point and a modification of the counter associated with the point if the intersection exists,
• if the surface is an exit surface, a search for an intersection between this elementary surface and the line passing through the image of the point, and a modification of the counter associated with the image of the point if the intersection exists,

said determination as to whether the point is inside or outside the object comprising a determination of the simultaneous presence of the point and of the image point inside the object according to the counter dedicated to the point and according to the counter dedicated to the image of the point.

4. Method according to claim 3, **characterised in that** the determination as to whether the point is inside or outside the object according to the counter dedicated to the point and according to the counter dedicated to the image of the point comprises a comparison of the counter dedicated to the point and of the counter dedicated to the image of the point.

5. Method according to claim 3 or 4, **characterised in that**, for all the points and images of the points, the lines passing through these points are parallel.

6. Method according to any one of claims 1 to 4, **characterised in that**, for all the points and images of the points, the lines passing through these points are not parallel.

7. Method according to any one of the preceding claims, **characterised in that** the space is a three-dimensional space.

8. Method according to claim 7, **characterised in that** the points (11) are grouped together in a surface (36), and **in that** each line (12) passing through a point and each line passing through an image of a point is transverse to this surface (36) through this point (11).

9. Method according to claim 8, **characterised in that** the surface (36) corresponds to a layer or at least to a part of a layer to be deposited for manufacturing the product by rapid prototyping.

10. Method according to any one of claims 1 to 6, **characterised in that** the space is a two-dimensional space.

11. Method according to any one of the preceding claims, **characterised in that** the iteration step is implemented in parallel over time for a plurality of elementary surfaces.

12. Method according to any one of the preceding claims, **characterised in that**, for at least one elementary surface, the iteration step is implemented in parallel over time for a plurality of points.

13. Method according to either one of claims 11 or 12, **characterised in that** the iteration steps implemented in parallel are synchronised by fixed execution duration.

14. Device for manufacturing a product implementing a method according to any one of the preceding claims, comprising:

- means for determining whether points in a set of points of a portion of a finite space are inside or outside an object, the portion of the finite space comprising said object, said object corresponding to the product to be manufactured or to a part of the product to be manufactured, and
- means for manufacturing the product using the determination as to whether each point among the set of points is inside or outside the object, a point determined as being inside the object corresponding to a point that is located in a material of the product to be manufactured

said object being broken down into elementary surfaces, a combination of the elementary surfaces forming said object, and in that, for each point among the set of points for which it is sought to determine whether they are inside or outside the object, the device comprises:

- means for determining a line passing through this point with which a meter dedicated solely to this point is associated, and
- means for iterating, on each of the elementary surfaces, the following operations:

• a search for an intersection between the elementary surface and the line passing through the point,
• a modification of the counter if the intersection exists, and

- means for determining whether the point is inside or outside the object according to the counter dedicated solely to the point,

each of the previous means comprising at least one computer, a central or computing unit, an analogue electronic circuit, a digital electronic circuit, a microprocessor, and/or software means.

15. Device according to claim 14, wherein the object corresponds to a polymerised layer of the product to be manufactured, the device furthermore comprises, for the work point in question:

- means for determining a line passing through an image of the point coincident with the line passing through the point, with which a counter dedicated solely to this image of the point is associated, said image of the point being an image derived from the point by a translation of said point in the direction of separation between two stereolithographic layers according to the depth of polymerisation of the layer,

the means for iterating being configured to iterate, on each of the elementary surfaces, the elementary surfaces being separated into two distinct groups, a group of surfaces of entry into the object and a group of surfaces of exit from the object with respect to a direction of movement fixed along the line, the following operations:

• a search for an intersection between the elementary surface and only one of the lines among the lines passing through the point and the line passing through the image of the point,
• a modification of the counter if the intersection exists, and
• if the surface is an exit surface, a search for an intersection between this elementary surface and the line passing through the image of the point, and a modification of the counter associated with the image of the point if the intersection exists, and

the means for determining whether the point is inside or outside the object being configured to determine the simultaneous presence of the point and of the image inside the object inside the object according to the counter dedicated to the point and according to the counter dedicated to the image of the point.

Art Antérieur

FIG. 1

FIG. 2

EP 2 628 102 B1

FIG. 3

FIG. 4

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020188369 A1

- EP 0555369 B1

**Littérature non-brevet citée dans la description**

- Robust Prototyping. **CHARI JANA K et al.** Solid Freeform Fabrication Symposiums. The University of Texas, 31 Août 1993